(19) Europäisches Patentamt
European Patent Office
Office européen des brevets

(11) Publication number: **0 042 406**
**B1**

(12) **EUROPEAN PATENT SPECIFICATION**

(45) Date of publication of patent specification: **19.06.85**

(51) Int. Cl.$^4$: **C 08 F 2/50**

(21) Application number: **81900236.1**

(22) Date of filing: **20.11.80**

(86) International application number:
**PCT/US80/01567**

(87) International publication number:
**WO 81/01850 09.07.81 Gazette 81/16**

(54) **PHOTOPOLYMERIZED HYDROPHILIC FILMS OR FIBERS OF ACRYLIC ACID AND POLYFUNCTIONAL CROSS-LINKING AGENTS.**

(30) Priority: **26.12.79 US 106772**

(43) Date of publication of application:
**30.12.81 Bulletin 81/52**

(45) Publication of the grant of the patent:
**19.06.85 Bulletin 85/25**

(84) Designated Contracting States:
**DE FR GB NL SE**

(56) References cited:
**GB-A-1 392 663**
**US-A-2 989 455**
**US-A-4 027 082**
**US-A-4 062 817**
**US-A-4 066 583**
**US-A-4 090 013**
**US-A-4 167 464**
**US-A-4 192 727**
**US-A-4 218 356**

(73) Proprietor: **The B.F. GOODRICH Company**
**Dept. 0015 WHB-6 500 South Main Street**
**Akron, Ohio 44318 (US)**

(72) Inventor: **GEORGE, Paul John**
**3429 Boston Mills Road**
**Richfield, OH 44286 (US)**

(74) Representative: **von Kreisler, Alek, Dipl.-Chem. et al**
**Deichmannhaus am Hauptbahnhof**
**D-5000 Köln 1 (DE)**

**EP 0 042 406 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

A variety of hydrophilic polymers which are useful in the manufacture of water absorbent films and fibers have been reported in the prior art. US—A—3,915,921 discloses copolymers of unsaturated carboxylic acid monomers with alkyl acrylate esters wherein the alkyl group contains 10 to 30 carbon atoms. However, because of the high Tg of these polymeric materials, it is difficult to extrude them in fiber or film form. Furthermore, films pressed from the powders require high temperatures, the films are brittle and fragile, and have a reduced initial rate of water absorption.

US—A—4,062,817 discloses polymers of unsaturated copolymerizable carboxylic acids, at least one alkyl acrylate or methacrylate wherein the alkyl group has 10 to 30 carbon atoms and another alkyl acrylate or methacrylate wherein the alkyl group has 1 to 8 carbons. This composition alleviated many of the deficiencies of the earlier compositions. Further improvements in the hydrophilic properties were obtained by compositions disclosed in US—A—4,066,583. This patent discloses a composition comprising (1) a copolymer of the type disclosed in US—A—4062817, except that after copolymerization 30 to 90 percent of the carboxylic groups were neutralized with an alkali metal or ammonia and (2) an aliphatic glycol, a plasticizer which is important in facilitating extrusion of the polymer.

US—A—4,090,013 discloses a swellable, water absorbent composition which contains a high molecular weight polyelectrolyte which is a synthetic copolymer of an ethylenically unsaturated monomer and a mono-ethylenically unsaturated carboxylic acid such as acrylic acid. Additionally there may be di-functional monomer such as allyl methacrylate used in a very small amount as a chain extender (not a cross-linking agent) and a polyvalent metal cation, preferably aluminum, which complexes the poly-electrolyte. After polymerization the anionic groups of the poly-electrolyte may be neutralized with a base, such as an alkali-metal hydroxide.

In US—A—4,167,464 highly water absorbent films and fibers are disclosed which are prepared by photopolymerizing alkaline metal salts of acrylic and at least one alkyl acrylate or methacrylate.

In GB—A—1,392,663 the preparation of ion exchange resin is disclosed which is prepared by polymerizing acrylic acid in chlorinated or fluorinated hydrocarbon media by radiation with high energy rays.

Summary of the invention

A cross-linked acrylic acid polymer in film or fiber form is prepared by photopolymerizing 50 to 99.5 weight percent of acrylic acid, 75 to 100% of the carboxylic groups of said acid having been neutralized prior to polymerization with an alkaline metal hydroxide, and 0.5 to 50 weight percent of a polyfunctional cross-linking agent. After spreading the monomer mixture to the desired thickness or after spinning it into a fiber it is polymerized upon exposure to a UV light source. The resulting film or fibers have extremely rapid and high degree of absorption of water and body fluids, such as urine or blood.

Detailed disclosure

This invention is directed to a cross-linked water insoluble, flexible, highly water absorbent polyacrylic acid in film or fiber form containing water, said film having been prepared by photopolymerizing in aqueous monomer mixture comprising

a) 50 to 99,5 weight percent of acrylic acid, 75 to 100 percent of carboxylic groups having been neutralized with an alkali metal or ammonium hydroxide base prior to polymerisation,

b) 0,5 to 50 weight percent of a cross-linking agent which contains 2 or more ethylenic unsaturations, and

c) 0,01 to 5 weight percent, based on the total weight of acrylic acid and cross-linking agent of a photoinitiator.

Preferably 90 to 99.5 weight percent of acrylic acid and 0.5 to 10 weight percent of a polyfunctional cross-linking agent are employed. Often materials having superior properties are obtained when 0.2 to 5.0 weight percent of a poly-functional cross-linking agent is employed.

The cross-linking agents that may be employed in this invention are monomeric compounds which contain two or more ethylenically unsaturated groups which can be copolymerized with acrylic acid by UV light. Usually the cross-linking agents have two to six ethylenically unsaturated groups such as allyl, acrylate or vinyl groups. The nature of that portion of the molecule which does not contain ethylenic unsaturation is of no critical consequence as long as it does not possess groups which would interfere with UV polymerization. Usually that part of the molecule is made up of a saturated hydrocarbon chain, a glycol or a polyglycol moiety, an aromatic moiety or cyanurate or isocyanurate ring or other non-polymerizable moieties.

Polyfunctional compounds that may be used as cross-linking agents include, for example, diallyl esters or ethers, allyl or methallyl acrylates and acrylamides, diacrylates and dimethacrylates, divinyl compounds and the like. Illustrative examples of polyfunctional cross-linking agents are polyethyleneglycol diacrylate and dimethacrylate, ethylene glycol dimethacrylate, tetraethyleneglycol diacrylate, 1,3-butyleneglycol dimethacrylate, diethyleneglycol divinyl ether, trimethylolpropane diallyl ether, divinyl benzene, trimethylolpropane triacrylate, trimethylolpropane trimethacrylate, triallyl cyanurate, N,N′-methylene-

bis(acryl-amid), pentaerythritol triacrylate, diallyl itaconate, allyl pentaerithritol, allyl sucrose, 1,6-hexanediol diacrylate, tetramethylene diacrylate and dimethacrylate, ethylene diacrylate and dimethacrylate, triethyleneglycol dimethacrylate and the like.

Acrylic acid must be neutralized prior to polymerization at least 50 percent and preferably 75 percent. The most preferred degree of neutralization is 95 to 100 percent because it was noted that with higher degrees of neutralization the resulting polymers exhibit better absorbency properties.

In addition to the above discussed monomers from which the films or fibers of this invention are prepared, minor amounts, that is usually less than 5 weight percent, but possibly up to 15 weight percent, of additional monomers may also be used. Whether these additional monomers are employed will depend on the end use and the physical properties required, that is, the speed and degree of absorption and the tear strength needed for the film or fabric. Such additional monomers are discussed below.

One type of such additional monomers are α,β-olefinically unsaturated nitriles preferably the monoolefinically unsaturated nitriles having from 3 to 10 carbon atoms such as acrylonitrile, methacrylonitrile, ethacrylonitrile, chloroacrylonitrile, and the like. Most preferred nitriles are acrylonitriles and methacrylonitrile.

Another useful class of additional monomers which may be incorporated in the films or fibers of this invention is monoethylenically unsaturated amides which have at least one hydrogen on the amide nitrogen and the olefinic unsaturation is alpha-beta to the carbonyl group. The preferred amides have the structure

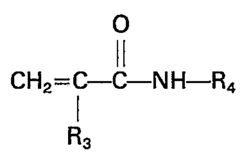

wherein $R_3$ is a member of the group consisting of hydrogen and an alkyl group having from 1 to 4 carbon atoms and $R_4$ is a member of the group consisting of hydrogen and an alkyl group having from 1 to 6 carbon atoms. Representative amides include acrylamide, methacrylamide, N-methyl acrylamide, N-t-butyl acrylamide, N-cyclohexyl acrylamide, N-ethyl acrylamide and others. Of the amides most preferred are acrylamide and methacrylamide.

Other acrylic amides include N-alkylol amides of alpha, beta-olefinically unsaturated carboxylic acids including those having from 4 to 10 carbon atoms such as N-methylol acrylamide, N-ethanol acrylamide, N-propanol acrylamide, and the like. The preferred monomers of the N-alkylol amide type are the N-alkylol amides of alpha, beta-monoolefinically unsaturated monocarboxylic acids and the most preferred is N-methylol acrylamide.

Also useful are N-alkoxymethyl acrylamides which have the structure

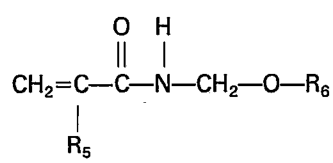

wherein $R_5$ is selected from the group consisting of hydrogen and methyl, and $R_6$ is an alkyl group having from 1 to 8 carbon atoms. It is thus intended that where references are made herein regarding the essential N-substituted alkoxymethyl amides, the term "acrylamide" includes "methacrylamide" within its meaning. The preferred alkoxymethyl acrylamides are those wherein $R_6$ is an alkyl group containing from 2 to 5 carbon atoms, and especially useful is N-butoxymethyl acrylamide.

The above discussed monomers are copolymerized by subjecting the monomer mixture to UV light. If a film is desired the monomer can be spread on a surface to be desired thickness, e.g. 25,4 μm to 0,64 mm (1 mil to 25 mil), and then subjected to UV light for a short time, e.g. 1 second to several minutes. The actual length of irradiation will depend on a number of factors, such as the thickness of the monomer film, the distance from and the intensity of the source of irradiation, the specific monomers employed and the ratio of such monomers to each other, the presence or absence of additional comonomers and the nature and the amount of the photoinitiator employed. The type of photoinitiator employed will depend at least in part on the type of UV irradiation employed (particularly its wave length) since various photoinitiators may be decomposed by UV light of different wavelengths). If it is desired that the material be in the form of fibers, the monomer mixture can be thickened and then spun into fibers which, upon exposure to UV light, are polymerized.

In order to effect quick and efficient polymerization under UV light, 0.01 to 5 weight percent of a photoinitiator, preferably 0.1 to 5 percent and more preferably 0.3 to 1.0 weight percent, must be incorporated into the monomer mixture. Any compound which dissociates into free radicals when exposed to UV radiation can be employed. There are many known photoinitiators or photosensitizers such as acetophenone, propiophenone, benzophenone, xanthone, fluorenone, benzaldehyde, fluorene, anthraquinone, triphenylamine, carbozole, 3- or 4-methylacetophenone, 3- or 4-pentylacetophenone, 3- or 4-methoxyacetophenone, 3- or 4-bromoacetophenone, 3- or 4-allylacetophenone, p-di-acetylbenzene, 3- or 4-methoxybenzophenone, 3- or 4-methylbenzophenone, 3- or 4-chlorobenzophenone, 4,4-dimethoxybenzophenone, 4,4'-bis(diethylamino-)benzophenone, 4-cholor-4'-benzylbenzophenone, 3-chloroxanthone, 3,9-dichloroxanthone, 3-chloro-8-nonyl-xanthone, 3-methoxyxanthone, 3-iodo-7-methoxyxanthone, 2,2-dimethoxyacetophenone, 2,2-dimethoxy-2-phenylacetophenone, 2,2-diethoxyacetophenone, 2,2-dibutoxyacetophenone, 2,2-dihexoxyacetophenone, 2,2-di(2-ethylhexoxy)acetophenone, 2,2-diphenoxyacetophenone, benzoin, a benzoin ether, such as methyl benzoin ether, ethyl benzoin ether, isopropyl benzoin ether, butyl benzoin ether, isobutyl benzoin ether, benzoin acetate, benzoin phenyl carbamate, α,α'-diethoxy-α-phenyl acetophenone, 4,4'-dicarboethoxybenzoinethyl ether, α-chloroacetophenone, α-bromoacetophenone, benzoin phenyl ether, α-methylbenzoin ethyl ether, benzoin acrylate, α-methylobenzoin methyl ether, α,α,α-trichloroacetophenone, o-bromoacetophenone, cumene hydroperoxide, benzoyl peroxide, dicumyl peroxide, tert-butyl perbenzoate, α,α-azobisisobutyronitrile, phenyl disulfide, chloromethylbenzanthrone, chloromethylanthraquinone, chloromethylnaphthalene, bromomethylbenzanthrone, bromomethylanthraquinone, bromomethylnaphthalene.

In addition to the photoinitiator it may be advantageous to employ also from 0.1 to 5.0 percent of an air cure promoter. Illustrative example of air cure promoters are mercaptoacetic acid, mercaptoethanol, Michler's ketone (4,4'-dimethylaminobenzophenone), diethanolamine, methyl diethanolamine, ethyl p-dimethylaminobenzoate, and the like.

The monomer mixtures are prepared as aqueous dispersions which eliminates the need for organic solvents. This avoids the pollution problems caused by the removal of organic solvents or the cost associated with the removal of the pollutants. In order to obtain a stable homogeneous dispersion of the monomers, it is preferred that the aqueous dispersions contain 0.01 to 5%, and preferably 0.1 to 1%, of a surface active agent such as an anionic, amphoteric, or nonionic dispersing agent or a mixture of dispersants. Useful anionic dispersing agents include alkali metal or ammonium salts of the sulfates of alcohols having from 8 to 18 carbon atoms such as sodium lauryl sulfate; ethanolamine lauryl sulfate, ethylamine lauryl sulfate; alkali metal and ammonium salts of sulfonated petroleum and paraffin oils; sodium salts of aromatic sulfonic acids such as dodecane-1-sulfonic acid and octadecane-1-sulfonic acid; aralkyl sulfonates such as sodium isopropyl benzene sulfonate, sodium dodecyl benzene sulfonate and sodium isobutyl naphthalene sulfonate; alkali metal and ammonium salts of sulfonated dicarboxylic acid esters such as sodium dioctyl sulfosuccinate, disodium-n-octadecyl sulfosuccinate; alkali metal or ammonium salts of free acid of complex organic mono- and diphosphate esters, sulfosuccinic acid derivatives (AEROSOL® dispersants), organic phosphate ester (GAFAC® dispersants) and the like. Nonionic dispersants such as octyl- or nonylphenyl polyethoxyethanol as well as the PLURONIC® and the TRITON® dispersants may also be used. Also useful are amphoteric dispersants such as dicarboxylic coconut derivatives (MIRANOL®). Further examples of useful dispersants are those disclosed beginning on page 102 in J. Van Alphen's "Rubber Chemicals", Elsevier Publishing Co., 1956.

The copolymers obtained from the above described monomer mixture can be photopolymerized in a film or a fiber form. The resulting film or fiber is an elastic, flexible material that has an appreciable degree of strength. If a fine, flaky form is desired, the film can be converted to such a form by drying and then pulverizing or grinding it standard equipment.

As water absorbent materials these polymers find many uses in film, fiber, fabric and similar forms. They are of particular utility in the disposable nonwoven industry where there is need for polymers which will absorb and retain water and ionic physiological fluids. An important feature of these polymers is their enhanced thickening property even in the presence of a salt. Specific applications include disposable diapers, medical-surgical supplies and personal care products. Such applications require a polymer which must imbibe the liquid to be absorbed rapidly and be a polymer that will not dissolve. Further, the fluid must be immobilized or congealed in some way to be retained. The materials may also be used as suitable additives to greatly increase the absorptive power of conventional absorbents such as cotton, wood pulp and other cellulosic absorbents used in applications such as wiping cloths, surgical sponges, catamenial devices, and the like. In a specific application, for example, a disposable diaper, there is an inner layer of a soft absorbent nonwoven material that absorbs and passes urine to an inner layer of fluffy fibrous absorbent material, wherein during the construction of this non-woven fiber agglomerates or fibers of this invention may be included and an additional impervious plastic layer, as polyethylene. A film of this invention may be used between the outer plastic layer and the inner fluffy absorbent layer. Use of the films or fibers of this invention can result in reduction in the bulk size of many disposable non-wovens.

The instant films or fibers can also be used as flocculants in water treatment, in metallurgical processes, in ore beneficiation and flotation, in agricultural applications such as in soil treatment or seed coating or in any applications where the inherent properties of the films or fibers are desirable, such as their thickening property in an aqueous medium.

To prepare the films or fibers of this invention, acrylic acid, a cross-linking agent, a dispersant and a photoinitiator are mixed in a vessel. Then either a film or fibers are produced from the monomer mixture which, upon exposure to UV light, are rapidly polymerized. The various steps in the procedure are described in greater detail below.

Monomer Mixture Preparation: The monomer mixture can be prepared by following one of two simple

procedures. One method is to dissolve a previously prepared and dried alkali metal or ammonium acrylate in water to which is then added a dispersant. To the aqueous solution is then added a cross-linking agent which already contains a photoinitiator. Another method is to prepare the acrylate salt in situ by adding acrylic acid to the proper amount of cold aqueous base (e.g. KOH, NaOH or $NH_4OH$) with cooling. To the aqueous solution is then added a cross-linking agent to which a photoinitiator was previously added; the dispersant is added last.

Film Preparation: The aqueous monomer dispersion is spread to a desired thickness (e.g. by the use of Boston-Bradley adjustable blade, by spraying or other known means) on a suitable substrate (e.g. Mylar, polyethylene, paper, etc.). The liquid film is then exposed to UV irradiation which polymerizes the monomer mixture into a soft, pliable form. If desired this film can be dried in an oven at about 50°C for 1 to 15 min. After drying the film may still retain some flexibility or become brittle and flaky, depending on the length of drying.

Fiber Preparation: The aqueous monomer dispersion is thickened to the desired degree with a non-reactive thickening agent such as a cellulose derivative as for example hydroxypropyl cellulose, high molecular weight polyvinyl pyrrolidone and the like; natural gums such as guar gum, locust bean gum, gum tragacanth; agar, naturally occuring hydrocolloids such as alginates and the like. Fibers are then spun from a spinneret in a regular manner and immediately exposed to UV irradiation.

To further illustrate the present invention the following examples are presented in table form below for illustrative purposes. The copolymers and the films were prepared according to the procedures described above. For each example in the table the amount of each ingredient employed is given. The amount of the cross-linking agent in each example is preceded by a letter which identifies the specific cross-linking agents that are used in the examples and the letters by which they are identified.

X-Linking agents used in examples

A—1,3-Butylenegycol dimethacrylate
B—Polyethyleneglycol diacrylate
C—Polyethyleneglycol dimethacrylate
D—Ethyleneglycol dimethacrylate
E—Diethyleneglycol divinyl ether
F—Tetraethylenglycol diacrylate
G—Trimethylolpropane triacrylate
H—Triallyl isocyanurate
I—Diallyl itaconate
J—Allyl methacrylate
K—Allyl pentaerythritol
L—N,N'-methylenebis(acrylamide)

TABLE IA

| Example No. | 1 | 2 | 3 | 4 | 5 |
|---|---|---|---|---|---|
| Sodium hydroxide | 20.8 g | 26.1 g | 26.1 g | 26.1 g | 26.1 g |
| % Neutralization | 75% | 95% | 95% | 95% | 95% |
| Water | 83.0 g | 102.0 g | 102.0 g | 102.0 g | 102.0 g |
| Acrylic acid | 50.0 g | 50.0 g | 50.0 g | 50.0 g | 50.0 g |
| X-linking agent | A 2.0 g | B 6.6 g | C 2.0 g | D 1.8 g | E 1.44 g |
| AEROSOL® A102[(a)] | 0.64 g | 0.72 g | 0.66 g | 0.66 g | 0.66 g |
| IRGACURE® 651[(b)] | 0.64 g | 0.72 g | 0.66 g | 0.66 g | 0.66 g |

[(a)] AEROSOL® A102 is disodium ethoxylated alcohol half ester of sulfosuccinic acid, a dispersant (30% solution).

[(b)] IRGACURE® 651 is 2,2-dimethoxy-2-phenylacetophenone, a photoinitiator.

TABLE IB

| Example No. | 6 | 7 | 8 | 9 | 10 |
|---|---|---|---|---|---|
| Sodium hydroxide | 26.1 g | 12.5 g | — | 26.1 g | 26.1 g |
| Potassium hydroxide | — | — | 33.1 g | — | — |
| % Neutralization | 95% | 75% | 85% | 95% | 95% |
| Water | 102.0 g | 50.0 g | 107.0 g | 102.0 g | 102.0 g |
| Acrylic Acid | 50.0 g | 30.0 g | 50.0 g | 50.0 g | 50.0 g |
| X-linking agent | F 2.70 g | G 1.6 g | J 0.95 g | H 2.2 g | I 2.0 g |
| AEROSOL® A102[(a)] | 0.66 g | 0.38 g | 1.20 g | 0.66 g | 0.66 g |
| IRGACURE® 651[(b)] | 0.66 g | 0.38 g | 0.70 g | 0.66 g | 0.66 g |

[(a)] AEROSOL® A102 is disodium ethoxylated alcohol half ester of sulfosuccinic acid, a dispersant (30% solution).
[(b)] IRGACURE® 651 is 2,2-dimethoxy-2-phenylacetophenone, a photoinitiator.

TABLE IC

| Example No. | 11 | 12 | 13 | 14 |
|---|---|---|---|---|
| Sodium hydroxide | 28.3 g | — | 33.3 g | 26.1 g |
| Ammonium hydroxide | — | 45.0 g | — | — |
| % Neutralization | 85% | 100% | 100% | 95% |
| Water | 112.5 g | 40.0 g | 132.0 g | 102.0 g |
| Acrylic acid | 60.0 g | 50.0 g | 60.0 g | 50.0 g |
| X-linking agent | A 1.86 g | A 2.0 g | K 0.36 g | L 1.38 g |
| AEROSOL® A102 | 1.32 g | 0.66 g | 1.32 g | 0.66 g |
| IRGACURE® 651 | — | 0.66 g | — | 1.92 g |
| Photoinitiator | 0.90 g[(1)] | — | 0.8 g[(2)] | |

[(1)] Photoinitiator consisted of 0.6 g of benzophenone and 0.3 of ethyl p-dimethylaminobenzoate.
[(2)] Photoinitiator is photosensitizer E-7552 sold by Stauffer Chemical Co. (a benzoin ether derivative).

Films or fibers having substantially the same properties are obtained when in some of the above compositions potassium hydroxide is employed in place of sodium or ammonium hydroxide, 2,2-diethoxyacetophenone in place of IRGACURE® 651 and an oligomeric surfactant POLYWET® KX-3 (from Uniroyal) or TRITON® N-111 (monophenoxy polyethoxy ethanol) in place of AEROSOL® A102.

A number of tests are available to determine the absorbency of a material. Following are descriptions of several test procedures which were employed in evaluating absorbency of the compositions of this invention.

Demand wettability test (DWT)

A test diaper is constructed from a 4 inch diameter pad (10.16 cm.) using materials from a commercial diaper. A film prepared from a polymer to be tested for absorbency is placed in the center of the test diaper between two layers of fluff (wood pulp). A diaper without the polymer film is used as a blank. The demand-wettability apparatus is a burette filled with the test fluid and firmly stoppered at the top, with an air bleed on the side, and a delivery orifice on the bottom connected by a flexible tube to the sample holder. The sample holder has an opening in the center which is connected to the flexible tube that leads to the delivery orifice of the burette. The sample holder is level with the air bleed opening in the burette. With this closed-system arrangement the fluid in the flexible tube that comes up to the opening in the sample holder is at zero pressure. Thus when the test diaper is placed on the sample holder over the opening it will absorb

the fluid on its own through wicking action. The sample's own absorbent powder will determine the rate and amount of fluid that will be withdrawn from the burette. The amount of fluid withdrawn at any given time can be easily read from the burette calibration. An additional feature is that absorbency can be measured against a range of pressures that can be obtained by placing various weights on top of the test diaper. Such pressures are intended to simulate the pressures applied on a diaper in actual use.

The test is described in greater detail by Lichstein, "Demand Wettability, a New Method of Measuring Absorbency Characteristics of Fabrics", Symposium Papers—INDA Technical Symposium, 1974, pp. 129—142.

Compression test (CT)

This test is a follow-up test to the Demand-Wettability Test (DWT). After the sample has absorbed the liquid against a lower pressure in a DWTest, it is removed from the DWT apparatus and placed atop a porous filter funnel. The sample is then subjected to 0,105 kg/cm$^2$ of pressure for 1 minute and the amount of liquid that is squeezed from the sample is measured. Said pressure corresponds to the maximum pressure that is exerted on portions of a diaper when a toddler is picked up or held. This is 10 to 15 times the pressure that the diaper normally would experience. The sample is then weighed to determine the amount of fluid in grams retained per one gram of polymer.

Static test (ST)

A weighed film sample is immersed in a test liquid for 10 minutes. It is then removed from the liquid, the excess liquid drained for a few seconds and then shaken lightly several times. The swelled sample is weighed again to determine the weight of liquid absorbed by the polymer.

In Table II below is presented data showing the absorbency properties of the various polymers of this invention. Each polymer in Table II is identified by the Example No. in which it was prepared. The absorbency tests in the Table below were carried out with simulated urine which had the following compositions: 97.09% distilled water, 1.94% urea, 0.80% sodium chloride, 0.11% magnesium sulfate heptahydrate and 0.06% calcium chloride. The values expressed in the Table are grams or milliliters of liquid (as indicated) absorbed per one gram of the copolymer.

TABLE II
Liquid absorption data

| Polymer of example | DWT (ml/g) | CT (g/g) | ST (g/g) |
|---|---|---|---|
| 1 | 37 | 32 | 35 |
| 2 | 31 | 26 | 22 |
| 3 | 34 | 29 | 31 |
| 4 | 38 | 31 | 40 |
| 5 | 37 | 33 | 27 |
| 6 | 34 | 25 | 24 |
| 7 | 34 | 28 | 25 |
| 8 | 38 | 37 | 44 |
| 9 | 44 | 32 | 48 |
| 10 | 33 | 27 | 25 |
| 11 | 42 | 33 | 52 |
| 12 | 25 | — | 44 |
| 13 | 31 | — | 60 |
| 14 | 22 | 20 | 19 |

## Claims

1. A cross-linked water insoluble, flexible, highly water absorbent polyacrylic acid in film or fiber form containing water, said film or fiber having been prepared by photopolymerizing an aqueous monomer mixture comprising

a) 50 to 99,5 weight percent of acrylic acid, 75 to 100 percent of carboxylic groups having been neutralized with an alkali metal or ammonium hydroxide base prior to polymerisation,

b) 0,5 to 50 weight percent of a cross-linking agent which contains 2 or more ethylenic unsaturations, and

c) 0,01 to 5 weight percent, based on the total weight of acrylic acid and cross-linking agent of a photoinitiator.

2. A film or fiber according to claim 1 containing additionally 0,01 to 5 percent of a dispersant.

3. A film or fiber according to claims 1 and 2, wherein the photoinitiator c) is in the amount of from 0.3 to 1.0 percent, and a dispersant is in the amount of from 0.1 to 1.0 percent.

4. A film or fiber according to claims 1 to 3 wherein the polyfunctional cross-linking agent is a monomeric compound which contains 2 or more ethylenically unsaturated groups which can be copolymerized with acrylic acid by UV light.

5. A film or fiber according to claims 1 to 4 wherein the photoinitiator is 2,2-dimethoxy-2-phenylacetophenone, 4,4'-bis(diethylamino)benzophenone, benzophenone, a benzoin ether, or a mixture thereof.

6. A film or fiber according to claims 1 to 5 wherein

a) acrylic acid is used in the amount of from 90 to 99.5 weight percent,

b) polyfunctional cross-linking agent is used in the amount of from 0.5 to 10 weight percent.

7. A film or fiber according to claims 1 to 6 wherein the polyfunctional cross-linking agent is selected from the group consisting of 1,3-butyleneglycol dimethacrylate, polyethyleneglycol diacrylate, polyethyleneglycol dimethacrylate, ethyleneglycol dimethacrylate, diethyleneglycol divinyl ether, tetraethyleneglycol diacrylate, trimethylolpropane trimethacrylate, triallyl isocyanurate, diallyl itaconate, allyl methacrylate, allyl pentaerythritol, N,N'-methylenebis(acrylamide).

8. A film or fiber according to claims 1 to 7 prepared from

a) from 94 to 98 weight percent of acrylic acid,

b) from 2 to 5 weight percent of a cross-linking agent of Claim 7, and

c) from 1 to 3 weight percent of a photoinitiator of Claim 5.

9. An article of manufacture designed for absorbing body fluids comprising an absorbent cellulose material and a film or fiber according to claims 1 to 8.

## Patentansprüche

1. Vernetzte, wasserunlösliche, flexible Polyacrylsäure mit hohem Absorptionsvermögen für Wasser in Form eines wasserhaltigen Films oder einer wasserhaltigen Faser, wobei dieser Film oder diese Faser hergestellt sind durch Photopolymerisieren eines wäßrigen Monomeren-Gemischs aus

a) 50 bis 99,5 Gew.-% Acrylsäure, wobei 75 bis 100% der Carboxyl-Gruppen mit einer Alkalimetall- oder Ammoniumhydroxid-Base vor der Polymerisation neutralisiert sind,

b) 0,5 bis 50 Gew.-% eines Vernetzungsmittels, das 2 oder mehr ethylenische Nichtsättigungen enthält, und

c) 0,01 bis 5 Gew.-%, bezogen auf das Gesamtgewicht von Acrylsäure und Vernetzungsmittel, eines Photoinitiators.

2. Film oder Faser nach Anspruch 1, enthaltend zusätzlich 0,01 bis 5% eines Dispergiermittels.

3. Film oder Faser nach den Ansprüchen 1 und 2, dadurch gekennzeichnet, daß der Photoinitiator c) in einer Menge von 0,3 bis 1,0% und ein Dispergiermittel in einer Menge von 0,1 bis 1,0% vorliegt.

4. Film oder Faser nach Anspruch 1 bis 3, dadurch gekennzeichnet, daß das polyfunktionelle Vernetzungsmittel eine monomere Verbindung ist, die zwei oder mehr ethylenisch ungesättigte Gruppen enthält, die mit Acrylsäure durch UV-Licht copolymerisiert werden können.

5. Film oder Faser nach Anspruch 1 bis 4, dadurch gekennzeichnet, daß der Photoinitiator 2,2-Dimethoxy-2-phenylacetophenon, 4,4'-Bis(diethylamino)benzophenon, Benzophenon, ein Benzoinether oder eine Mischung aus diesen ist.

6. Film oder Faser nach Anspruch 1 bis 5, dadurch gekennzeichnet, daß

a) Acrylsäure in einer Menge von 90 bis 99,5 Gew.-% und

b) das polyfunktionelle Vernetzungsmittel in einer Menge von 0,5 bis 10 Gew.-% verwendet werden.

7. Film oder Faser nach Anspruch 1 bis 6, dadurch gekennzeichnet, daß das polyfunktionelle Vernetzungsmittel aus der aus 1,3-Butylenglycoldimethacrylat, Polyethylenglygoldiacrylat, Polyethylenglygoldimethacrylat, Ethylenglygoldimethacrylat, Diethylenglycol-divinylether, Tetraethylenglygoldiacrylat, Trimethylolpropan-trimethacrylat, Triallylisocyanurat, Diallylitaconat, Allylmethacrylat, Allylpentaerythrit und N,N'-Methylenbis(acrylamid) bestehenden Gruppe ausgewählt ist.

8. Film oder Faser nach Anspruch 1 bis 7, hergestellt aus

a) 94 bis 98 Gew.-% Acrylsäure,

b) 2 bis 5 Gew.-% eines Vernetzungsmittels nach Anspruch 7 und

c) 1 bis 3 Gew.-% eines Photoinitiators nach Anspruch 5.

9. Für die Aufnahme von Körperflüssigkeiten bestimmter Fertigartikel, umfassend ein absorbierendes Cellulose-Material und einen Film oder eine Fase nach Anspruch 1 bis 8.

**Revendications**

1. Un polymère de l'acide acrylique, absorbant forteent l'eau, souple, insoluble dans l'eau, réticulé, sous forme de film ou de fibre contenant de l'eau, ce film ou cette fibre ayant été préparé par photopolymérisation d'un mélange monomère aqueux contenant

a) 50 à 99,5% en poids d'acide acrylique, 75 à 100% des groupes carboxyliques ayant été neutralisés par une base d'hydroxyde de métal alcalin ou d'ammonium avant la polymérisation,

b) 0,5 à 50% en poids d'un agent de réticulation contenant au moins deux insaturations éthyléniques, et

c) 0,01 à 5% en poids, sur la base du poids total de l'acide acrylique et de l'agent de réticulation, d'un photoinitiateur.

2. Un film ou une fibre selon la revendication 1, contenant en outre 0,01 à 5% d'un dispersant.

3. Un film ou une fibre selon la revendication 1 ou 2, dans lequel le photoinitiateur c) se trouve en une quantité de 0,3 à 1,0%, et un dispersant en une quantité de 0,1 à 1,0%.

4. Un film ou une fibre selon les revendications 1 à 3, dans lequel l'agent de réticulation polyfonctionnel est un composé monomère contenant au moins 2 groupes à insaturation éthylénique pouvant être polymérisés avec l'acide acrylique au moyen d'une lumière UV.

5. Un film ou une fibre selon les revendications 1 à 4, dans lequel le photoinitiateur est la 2,2-diméthoxy-2-phénylacétophénone, la 4,4-bis(diéthylamino)benzophénone, la benzophénone, un éther de benzoïne ou un de leurs mélanges.

6. Un film ou une fibre selon les revendications 1 à 5, où

a) l'acide acrylique est utilisé en une quantité de 90 à 99,5% en poids,

b) l'agent de réticulation polyfonctionnel est utilisé en une quantité de 0,5 à 10% en poids.

7. Un film ou une fibre selon les revendications 1 à 6, dans lequel l'agent de réticulation polyfonctionnel est choisi dans le groupe comprenant le diméthacrylate de 1,3-butylène-glycol, le diacrylate de polyéthylène glycol, le diméthacrylate de polyéthylèneglycol, le diméthacrylate d'éthylène-glycol, l'éther divinylique du diéthylèneglycol, le diacrylate de tétraéthylèneglycol, le triméthacrylate de triméthylolpropane, l'isocyanurate de triallyle, l'itaconate de diallyle, le méthacrylate d'allyle, l'allyl-pentaérylthritol, le N,N'-méthylènebis (acrylamide).

8. Un film ou une fibre selon les revendications 1 à 7, préparé à partir

a) de 94 à 98% en poids d'acide acrylique,

b) de 2 à 5% en poids d'un agent de réticulation selon la revendication 7, et

c) de 1 à 3% en poids d'un photoinitiateur selon la revendication 5.

9. Un article manufacturé, destiné à absorber les fluides corporels, comprenant un matériau cellulosique absorbant et un film ou une fibre selon les revendications 1 à 8.